# EUROPÄISCHE PATENTSCHRIFT

(11) **EP 1 523 628 B1**
(45) Veröffentlichungstag und Bekanntmachung des Hinweises auf die Patenterteilung: **30.08.2006**
(21) Anmeldenummer: 03766201.2
(22) Anmeldetag: 17.07.2003
(51) Int. Cl.: F16D 23/14

(54) **KUPPLUNGSAUSRÜCKLAGER**
CLUTCH DISENGAGEMENT BEARING
BUTEE D'EMBRAYAGE

(30) Priorität: 24.07.2002 DE 10233449
(43) Veröffentlichungstag der Anmeldung: 20.04.2005
(73) Patentinhaber: Schaeffler KG, 91074 Herzogenaurach (DE)
(72) Erfinder: DITTMER, Steffen, 91074 Herzogenaurach (DE); KLÖPFER, Bernhard, 91438 Bad Windsheim (DE); WINKELMANN, Ludwig, 91056 Erlangen (DE)
(86) Internationale Anmeldenummer: PCT/EP2003/007759
(87) Internationale Veröffentlichungsnummer: WO 2004/013509

(56) Entgegenhaltungen:
- DE-A- 1 425 361
- DE-A- 3 108 609
- DE-A- 19 912 432
- GB-A- 1 350 236

## Beschreibung

### Gebiet der Erfindung

Die Erfindung bezieht sich auf ein Ausrücklager nach den Oberbegriff der Anspruch 1, das für eine Schalttrennkupplung bestimmt ist, welche im eingebauten Zustand zwischen einer Brennkraftmaschine und einem Zahnräderwechselgetriebe angeordnet ist. Das Ausrücklager bzw. das Kupplungsausrücklager ist Bestandteil einer Betätigungseinrichtung, mit der die Schalttrennkupplüng eingerückt bzw. ausgerückt werden kann. Das als ein Schrägschulterlager gestaltete Ausrücklager umfasst einen ersten drehfixierten Lagerring, der mit einem Ringflansch an der Betätigungseinrichtung lagefixiert ist. Ein zweiter umlaufender Lagerring des Ausrücklagers weist ebenfalls einen Ringflansch auf, welcher mittelbar oder unmittelbar mit einem Federmittel der Schalttrennkupplung zusammenwirkt. Zwischen den Lagerringen geführte Wälzkörper des Ausrücklagers sind in einem Käfig eingesetzt.

### Hintergrund der Erfindung

Bei einer Betätigung, dem Einrücken und dem Ausrücken der Schalttrennkupplung, wird das Kupplungsausrücklager axial verschoben, wobei das Ausrücklager unabhängig von der Funktionslage stetig von einer Axialkraft beaufschlagt wird, welche von dem Federmittel der Schalttrennkupplung, insbesondere Federzungen der Kupplungsteller federbeaufschlagt wird. Während des Betätigungsvorgangs stellt sich eine radiale Verlagerung des Abstützbereichs der Tellerfeder an dem Ausrücklager ein. Diese Relativbewegung wird von einer weiteren, insbesondere vom Axialschlag der Schalttrennkupplung sowie einer Drehungleichförmigkeit der Brennkraftmaschine überlagert. Eine rein metallische Berührung der Tellerfeder an dem Ringflansch des umlaufenden Lagerrings des Ausrücklagers verursacht einen starken Verschleiß, verstärkt die zur Betätigung der Schalttrennkupplung erforderliche Kraft und kann weiterhin ein nachteiliges Geräusch verursachen, was insgesamt den Fahrkomfort beeinträchtigt.

Die DE 22 40 383 A1 zeigt ein Kupplungsausrücklager, das eine unmittelbare Abstützung der Tellerfeder an dem umlaufenden Lagerring vermeidet. Dazu ist dem umlaufenden inneren Lagerring ein Anschlagring zugeordnet, welcher insbesondere zum Ausgleich eines Achsversatzes zwischen den rotierenden Bauteilen der Schalttrennkupplung und der Betätigungseinrichtung dient. Die Kontaktfläche zwischen den Reibpartnern, dem Anschlagring und der Anlagefläche ist mit einer reibungsmindernden Beschichtung versehen. Die bekannte Anordnung ermöglicht keine definierte Lage des Anlagerings im eingebauten Zustand, aufgrund der schwimmenden Anordnung an dem rotierenden Lagerring. Nachteilig erfordert die bekannte Lösung einen relativ großen Einbauraum sowohl in axialer als auch in radialer Richtung aufgrund der spangebend hergestellten Bauteile und der schwimmenden Anordnung des Anschlagrings an dem rotierenden Lagerring.

Das Dokument DE 199 12 432 A1 zeigt ein Ausrücklager, an dessen umlaufendem Außenring ein Einstellring unmittelbar abgestützt ist. Der Einstellring ermöglicht bzw. kompensiert Fertigungstoleranzen, bzw. allgemein einen Achsversatz bzw. Axialschlag der Schalttrennkupplung. Dazu ist eine sphärische Kontaktzone zwischen dem Außenring und dem Einstellring vorgesehen, wodurch diese Bauteile gegeneinander schwenkbar sind. Dabei stellt sich eine unmittelbare metallische Berührung zwischen dem Einstellring und dem Außenring ein. Diese Anordnung verstärkt den Verschleiß und kann zu einer Reibrostbildung führen, verbunden mit einem nachteiligen Kupplungsrupfen. Mit dieser Anordnung ist auch nicht die von Fahrzeugherstellern heute geforderte Lebensdauer erzielbar.

In DE 31 08 609 A1 ist der Außenring im Bereich seiner Stirnseite an dem Kontakt mit der Tellerfeder gehärtet und mit einer Hartchromschicht versehen. Derartige Schichten weisen jedoch einen relativ hohen Reibwert auf.

### Zusammenfassung der Erfindung

Die zuvor beschriebenen Nachteile der bekannten Lösungen berücksichtigend, ist es Aufgabe der Erfindung, ein Ausrücklager zu realisieren, das ohne Einflussnahme auf den erforderlichen Bauraum und den Bauteileumfang eine verbesserte Lebensdauer aufweist und kostengünstig herstellbar ist.

Diese Problemstellung wird gemäß den Ansprüchen 1 und 9 gelöst.

Danach ist zur Verbesserung der Verschleißfestigkeit zumindest in einer sphärischer Kontaktzone zwischer den umlaufenden Lagering und den Einstellring zumindest ein Bauteil eine Harstoffbeschichtung aus einer Kohlenwasserstoffschicht mit Wolfsmanteilen aufweist. Die Hartstoffbeschichtung ist dabei so dünn aufgetragen, dass diese einbaunerutral ist, d. h. den Bauraum des Ausrücklagers nicht beeinflusst. Die Hartstoffbeschichtung gewährleistet dabei eine hohe Oberflächenhärte und verhindert damit einen nachteiligen Reibrost, der den Verschleiß und die erforderliche Betätigungskraft zum Einrücken und Ausrücken der Schalttrennkupplung vergrößert. Die Hartstoffbeschichtung bewirkt weiterhin eine vorteilhafte reibungsmindernde Kontaktzone, wobei sich in der Kontaktzone Reibungsverhältnisse einstellen, die sich aufgrund der Hartstoffschicht eine nahezu konstante Reibungsverhältnisse über die Lebensdauer der Schalttrennkupplung einstellen.

Gemäß Anspruch 9 ist ein Verfahren beansprucht, bei dem die Hartstoffbeschichtung mittels einer Plasma-Oberflächentechnik auf die verschleißgefährdeten Oberflächen des Ausrücklagers aufgetragen wird. Alternativ schließt die Erfindung ein, die Hartstoffbeschichtung mittels Laserpulsieren aufzutragen.

Weitere vorteilhafte Ausgestaltungen der Erfindung nach Anspruch 1 sind Gegenstand der abhängigen Ansprüche 2 bis 8.

Zusätzlich schließt die Erfindung weiterhin ein, die Wälzkörperlaufbahn eines oder beider Lagerringe mit einer Hartstoffbeschichtung zu versehen. Diese Maßnahme wirkt neben einer Verschleißoptimierung und einem Korrosionsschutz gleichzeitig reibungsmindernd.

Als weitere vorteilhafte Maßnahme ermöglicht die Erfindung weitere stark beanspruchte Bereiche des Ausrücklagers partiell mit einer Hartstoffbeschichtung zu versehen. Dazu eignet sich insbesondere der Ringflansch, welcher kraftschlüssig mit dem Federmittel, der Tellerfeder der Schalttrennkupplung in Verbindung steht. Bevorzugt sind dabei beide Kontaktzonen an dem Federmittel und an dem Ringflansch beschichtet.

Um die Anforderung für die unterschiedlichen Funktionsflächen des Ausrücklagers zu entsprechen, schließt die Erfindung weiterhin ein, die Abstützflächen bzw. Anlaufflächen der Lagerringe, die mit der Betätigungseinrichtung bzw. dem Federmittel der Schalttrennkupplung zusammenwirken, mit einer eine hohe Verschleißbeständigkeit aufweisenden Hartstoffbeschichtung zu versehen. Um jedoch geringste Reibung an der sphärischen Kontaktzone zwischen dem Einstellring und dem umlaufenden Lagerring zu erzielen, wird vorgeschlagen, eine hinsichtlich der Reibungsoptimierung modifizierte Hartstoffschicht zu beschichten, wobei die Beschichtungen bevorzugt ein einem Arbeitsgang erfolgen.

Zur Erzielung höchster Lagerbeanspruchung hinsichtlich Temperatur und zur Reduzierung der Lagerreibung wird erfindungsgemäß zumindest die Laufbahn des umlaufenden Lagerrings mit einer Hartstoffbeschichtung versehen. Diese Maßnahme gewährleistet hohe Lagertemperaturen und verbessert gleichzeitig die Notlaufeigenschaften bei einer auftretenden Mangelschmierung.

Bei einer gezielten Beschichtung des Ringflansches mit einer Hartstoffschicht, welcher im eingebauten Zustand kraftschlüssig mit dem Federmittel der Schalttrennkupplung in Verbindung steht, kann vorteilhaft auf eine separate Anlaufscheibe verzichtet werden, die zur Verschleiß- und Reibungsoptimierung in diese Kontaktzone eingesetzt ist.

Eine Hartstoffbeschichtung, aufgetragen auf einzelne Wälzlagerkomponenten wie Laufringe, Wälzkörper und hochbelastete Kontaktzonen wird neben einer höheren Temperaturbelastbarkeit, Verschleißfestigkeit, Notlaufeigenschaft außerdem eine Reduzierung der Rollreibung erreicht, was insgesamt die Gebrauchsdauer des Ausrücklagers auch für extreme Beanspruchungen erhöht.

Die erfindungsgemäße Hartstoffbeschichtung wird vorzugsweise in einer Dicke von 1 ≦ 0,300 mm aufgetragen. Für eine Einstoffbeschichtung eignet sich eine Schichtdicke von 0,003 bis 0,01 mm. Dagegen kann eine Zweistoff- oder eine Multibeschichtung in einer Schichtdicke bis zu 0,3 mm aufgetragen werden.

### Kurze Beschreibung der Zeichnungen

Zwei Zeichnungen zeigen zwei Ausführungsbeispiele der Erfindung, die nachfolgend näher beschrieben werden. Es zeigen:
- Figur 1: in einem Halbschnitt ein Ausrücklager mit einem drehstarr angeordneten Innenring und einem umlaufenden Außenring, an dem sich ein Einstellring abstützt;
- Figur 2: ein alternativ gestaltetes Ausrücklager, umfassend einen drehstarr angeordneten Außenring, der mit einem umlaufenden Innenring kombiniert ist, an dem sich ein Einstellring abstützt.

### Detaillierte Beschreibung der Zeichnungen

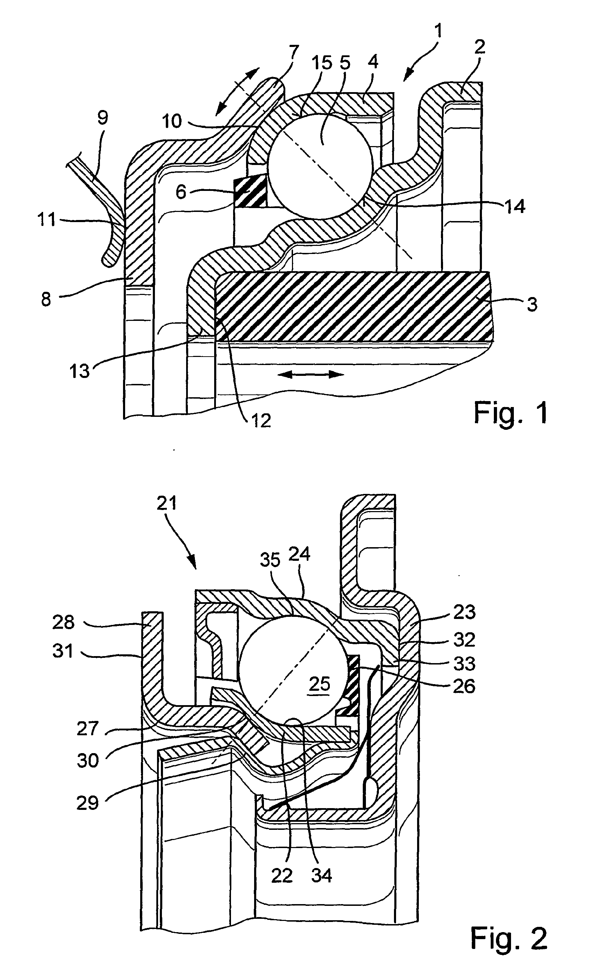

Das in Figur 1 abgebildete Ausrücklager 1 ist im eingebauten Zustand dargestellt. Ein innerer Lagerring 2 ist dabei drehstarr mit einer Betätigungseinrichtung 3 verbunden, welche eine in Figur 1 nicht abgebildete Antriebswelle umschließt, die eine Brennkraftmaschine mit einem Zahnräderwechselgetriebe verbindet. Zum Ein- und Ausrücken der Betätigungseinrichtung 3 ist diese axial verschiebbar, gekennzeichnet durch den Doppelpfeil. Zwischen dem inneren Lagerring 2 und einem zugehörigen weiteren äußeren Lagerring 4 sind Wälzkörper 5 geführt, welche in einem Käfig 6 beabstandet angeordnet sind. Au-ßenseitig stützt sich an dem äußeren Lagerring 4 ein Einstellring 7 ab, welcher einen radial nach innen gerichteten Ringflansch 8 bildet, an dem sich kraftschlüssig ein Federmittel 9, insbesondere eine Tellerfeder, der Schalttrennkupplung abstützt. Diese Anordnung hat zur Folge, dass sowohl der Einstellring 7 als auch der äußere Lagerring 4 mit der Schalttrennkupplung umlaufend angeordnet sind. Zum Ausgleich eines Kupplungsschlages bzw. eines Axialversatzes zwischen der Schalttrennkupplung und der Betätigungseinrichtung 3 ist der Einstellring 7 in Verbindung mit dem äußeren Lagerring 4 in der Lage diesen Versatz zu kompensieren. Dazu ist zwischen den Bauteilen, dem Einstellring 7 und dem äußeren Lagerring 4 eine sphärische Kontaktzone 10 vorgesehen, die es dem Einstellring 7 ermöglicht eine begrenzte Schwenkbewegung gegenüber dem äußeren Lagerring 4 auszuführen, gemäß dem Doppelpfeil.

Das Ausrücklager 1 weist unterschiedliche Funktionsflächen auf, die einer hohen Beanspruchung ausgesetzt sind. Als Maßnahme um den Verschleiß zu mindern, um beispielsweise eine nachteilige Reibrostbildung zu unterbinden, ist erfindungsgemäß vorgesehen, zumindest die hochbeanspruchten Kontaktzonen des Ausrücklagers 1 mit einer Hartstoffbeschichtung zu versehen. Erfindungsgemäß ist die Kontaktzone 10 zwischen dem Einstellring 7 und dem äußeren Lagerring 4 beschichtet. Weiterhin bietet es sich an die Kontaktzone 11 zwischen dem Ringflansch 8 des Einstellrings 7 und dem Federmittel 9 mit einer Hartstoffschicht zu beschichten. Weiterhin eignet sich die zwischen dem Ringflansch 13 und der Betätigungseinrichtung 3 einstellende Kontaktfläche 12 zur Beschichtung. Außerdem bietet es sich an, die Laufflächen 14, 15 zwischen den Wälzkörpern 5 und dem inneren Lagerring 2 bzw. den Wälzkörpern 5 und dem äußeren Lagerring 4 mit einer Hartstoffbeschichtung zu versehen. Alternativ zu einer partiellen Beschichtung von hochbeanspruchten Kontaktzonen 10, 11, 12 oder den Laufflächen 14, 15 bietet es sich an, das Ausrücklager allseitig mit einer geeigneten Hartstoffbeschichtung zu versehen.

Das in Figur 2 abgebildete Ausrücklager 21 umfasst einen inneren Lagerring 22 sowie einen äußeren der Betätigungseinrichtung 23 zugeordneten Lagerring 24. Zwischen den Lagerringen 22, 24 sind als Kugeln gestaltete Wälzkörper 25 in den Käfig 26 geführt. An dem inneren Lagerring 26 stützt sich der Einstellring 27 ab, der im eingebauten Zustand über den Ringflansch 28 mit der in Figur 2 nicht abgebildeten Schalttrennkupplung verbunden ist. Der mittels eines Halteelementes 29 verliersicher am inneren Lagerring 22 positionierte Einstellring 27 bildet gemeinsam mit dem inneren Lagerring 22 eine sphärische Kontaktzone 30, die zur Verschleiß- und Reibungsoptimierung mit einer geeigneten Hartstoffbeschichtung versehen ist. Die Hartstoffbeschichtung ist weiterhin bevorzugt auf die Kontaktzonen 31, 32 aufgetragen, über die der Ringflansch 28 des Einstellrings 27 an der Schalttrennkupplung und der äußere Lagerring 24 über dessen Ringflansch 33 an der Betätigungseinrichtung 23 abgestützt sind. Weitere hochbelastete Kontaktzonen, die vorteilhaft mittels einer Hartstoffbeschichtung geschützt werden, sind die Laufflächen 34, 35 der Wälzkörper 25 an dem inneren Lagerring 22 bzw. dem äußeren Lagerring 24.

### Bezugszahlen

- 1: Ausrücklager
- 2: Lagerring (innen)
- 3: Betätigungseinrichtung
- 4: Lagerring (außen)
- 5: Wälzkörper
- 6: Käfig
- 7: Einstellring
- 8: Ringflansch
- 9: Federmittel
- 10: Kontaktzone
- 11: Kontaktzone
- 12: Kontaktzone
- 13: Ringflansch
- 14: Lauffläche
- 15: Lauffläche
- 21: Ausrücklager
- 22: Lagerring (innen)
- 23: Betätigungseinrichtung
- 24: Lagerring (außen)
- 25: Wälzkörper
- 26: Käfig
- 27: Einstellring
- 28: Ringflansch
- 29: Halteelement
- 30: Kontaktzone
- 31: Kontaktzone
- 32: Kontaktzone
- 33: Ringflansch
- 34: Lauffläche
- 35: Lauffläche

## Patentansprüche

1. Ausrücklager, das für eine zwischen einer Brennkraftmaschine und einem Zahnräderwechselgetriebe angeordneten Schalttrennkupplung bestimmt ist, ausgebildet als ein selbstjustierendes Schrägschulterlager, umfassend:
- einen ersten drehfixierten Lagerring (2, 24), welcher über einem Ringflansch (13, 33) an einer Betätigungseinrichtung (3, 23) lagefixiert ist;
- einen zweiten, umlaufenden Lagerring (4, 22), an dem über einen Einstellring (7, 27) ein Federmittel (9) der Schalttrennkupplung abstützbar ist;
- Wälzkörper (5, 25) ; die zwischen den Lagerringen (2, 4; 22, 24) geführt und in einem Käfig (6, 26) eingesetzt sind;
**dadurch gekennzeichnet, dass** in einer sphärischen Kontaktzone (10, 30) zwischen dem umlaufenden Lagerring (4, 22) und dem Einstellring (7, 27) zumindest ein Bauteil eine Hartstoffbeschichtung aus einer Kohlenwasserstoffschicht mit Wolframanteilen aufweist.

2. Ausrücklager nach Anspruch 1, versehen mit einem drehstarr angeordneten Innenring (2) und einem umlaufenden Außenring (4), wobei ein Ringflansch des Außenrings (4) mittelbar oder unmittelbar mit der Schalttrennkupplung zusammenwirkt.

3. Ausrücklager nach Anspruch 1, dessen Außenring (24) drehstarr und dessen Innenring (22) umlaufend angeordnet ist, wobei der Innenring (22) über einen Ringflansch mit dem Federmittel der Schalttrennkupplung zusammenwirkt.

4. Ausrücklager nach Anspruch 1, ausgebildet als ein selbstjustierendes Ausrücklager (1, 21), an dessen umlaufenden Lagerring (4, 22) ein Einstellring (7, 27) abgestützt ist, und ein Ringflansch (8, 28) des Einstellrings (7, 27) mit dem Federmittel der Schalttrennkupplung zusammenwirkt.

5. Ausrücklager nach Anspruch 1, wobei in der Kontaktzone (11, 31) zwischen dem Federmittel (9) der Schalttrennkupplung und dem Ringflansch (8, 28) des Einstellrings (7; 27) zumindest ein Bauteil eine Hartstoffbeschichtung aufweist.

6. Ausrücklager nach Anspruch 1, bei dem zumindest die für die Wälzkörper (5, 25) bestimmte Lauffläche (15, 22) eine Hartstoffbeschichtung aufweist.

7. Ausrücklager nach Anspruch 1, das als Hartstoffbeschichtung eine Mehrlagenschicht bestehend aus, W-C:H und a-C:H umfasst.

8. Ausrücklager nach Anspruch 1, bei dem die Hartstoffbeschichtung auf zumindest eine Kontaktfläche (10, 11, 12; 30, 31, 32) und / oder auf zumindest eine Lauffläche (15, 22) in einer Dicke von ≦ 0,015 mm aufgetragen ist.

9. Verfahren zur Durchführung einer Beschichtung an einem Ausrücklager nach Anspruch 1, **dadurch gekennzeichnet, dass** mittels einer Plasma-Oberflächentechnik oder einem Laserpulsieren eine Hartstoffbeschichtung zumindest auf eine verschleißgefährdete Kontaktzone (10, 11, 12; 30, 31, 32) und / oder eine Lauffläche (15, 22) des Ausrücklagers (1, 21) aufgetragen ist.

## Claims

1. Release bearing for a gearshift clutch arranged between an internal combustion engine and a variable speed gear transmission, said release bearing being configured as a self-adjusting angular contact ball bearing and comprising:
- a first, rotationally fixed bearing ring (2, 24) that is fixed in place through an annular flange (13, 33) on an actuating device (3, 23);
- a second, rotating bearing ring (4, 22) on which a spring means (9) of the gearshift clutch can be supported through an adjusting ring (7, 27);
- rolling elements (5, 25) that are guided between the bearing rings (2, 4; 22, 24) and are inserted into a cage (6, 26);
**characterised in that** at least one component comprises, in a spherical contact zone (10, 30) between the rotating bearing ring (4, 22) and the adjusting ring (7, 27) a hard-material coating of a carbon hydride layer with tungsten fractions.

2. Release bearing according to claim 1, provided with a rotationally fixed inner ring (2) and a rotating outer ring (4), an annular flange of the outer ring (4) cooperating directly or indirectly with the gearshift dutch.

3. Release bearing according to daim 1, the outer ring (24) of which is arranged fixed in rotation and the inner ring (22) of which is arranged for rotation, the inner ring (22) cooperating through an annular flange with the spring means of the gearshift clutch.

4. Release bearing according to claim 1, configured as a self-adjusting release bearing (1, 21) on the rotating bearing ring (4, 22) of which, an adjusting ring (7, 27) is supported, and an annular flange (8, 28) of the adjusting ring (7, 27) cooperates with the spring means of the gearshift clutch.

5. Release bearing according to claim 1, wherein at least one component comprises, in the contact zone (11, 31) between the spring means (9) of the gearshift clutch and the annular flange (8, 28) of the adjusting ring (7, 27), a hard-material coating.

6. Release bearing according to claim 1, wherein at least the running surface provided for the rolling elements (5, 25) comprises a hard-material coating.

7. Release bearing according to claim 1, comprising as a hard-material coating, a multi-layer coat consisting of W-C:H and a-C:H.

8. Release bearing according to claim 1, wherein the hard-material coating is applied with a thickness of ≤ 0.015 mm at least to one contact surface (10, 11, 12; 30, 31, 32) and / or at least on one running surface (15, 22).

9. Method of applying a coating to a release bearing according to daim 1, **characterised in that** a hard-material coating is applied by a plasma surface treatment technique or by laser pulsation to at least one wear-endangered contact zone (10, 11, 12; 30, 31 32) and / or to one running surface (15, 22) of the release bearing (1, 21).

## Revendications

1. Butée de débrayage pour un embrayage agencé entre un moteur à combustion interne et une transmission par engrenages, ladite butée de débrayage étant configurée sous la forme d'un roulement à auto-ajustage à billes à contact oblique, et comprenant :
- un premier anneau de roulement (2, 24) qui est immobilisé en rotation et fixé en position par une bride annulaire (13, 33) sur un dispositif d'actionnement (3, 23) ;
- un second anneau de roulement (4, 22) qui est mobile en rotation et sur lequel peut être supporté par l'intermédiaire d'une bague d'ajustement (7, 27), un moyen ressort (9) de l'embrayage ;
- des corps roulants (5, 25) qui sont guidés entre les anneaux de roulement (2, 4 ; 22, 24) et sont logés dans une cage (6, 26) ;
**caractérisé en ce que**, au moins un composant comprend, dans une zone sphérique de contact (10, 30) entre l'anneau tournant (4, 22) de roulement et la bague d'ajustement (7, 27) un revêtement en matériau dur comprenant une couche de hydrocarbure ayant des fractions de tungstène.

2. Butée de débrayage selon la revendication 1, munie d'un anneau intérieur (2) immobilisé en rotation et un anneau extérieur (4) mobile en rotation, une bride annulaire de l'anneau extérieur (4) coopérant de manière directe ou indirecte avec l'embrayage.

3. Butée de débrayage selon la revendication 1, dont l'anneau extérieur (24) est immobilisé en rotation et dont l'anneau intérieur (22) est agencé tournant, l'anneau intérieur (22) coopérant par l'intermédiaire d'une bride annulaire avec le moyen ressort de l'embrayage.

4. Butée de débrayage selon la revendication 1, qui est configurée sous la forme d'une butée de débrayage (1, 21) à auto-ajustage, et sur l'anneau de roulement tournant (4, 22) de ladite butée est supportée une bague d'ajustement (7, 27), une bride annulaire (8, 28) de la bague d'ajustement (7, 27) coopérant avec le moyen ressort de l'embrayage.

5. Butée de débrayage selon la revendication 1, dans laquelle au moins un composant comprend, dans la zone de contact (11, 31) entre le moyen ressort (9) de l'embrayage et la bride annulaire (8, 28) de la bague d'ajustement (7, 27), un revêtement en matériau dur.

6. Butée de débrayage selon la revendication 1, dans laquelle au moins la surface de roulement (15, 22) prévue pour les corps roulants (5, 25) comprend un revêtement en matériau dur.

7. Butée de débrayage selon la revendication 1, qui comprend un revêtement en matériau dur consistant de W-C : H et de a-C: H.

8. Butée de débrayage selon la revendication 1, dans laquelle le revêtement en matériau dur est appliqué avec une épaisseur de ≤ 0,015 mm au moins à une surface de contact (10, 11, 12 ; 30, 31, 32) et / ou au moins à une surface de roulement (15, 22).

9. Procédé d'application d'un revêtement à une butée de débrayage selon la revendication 1, **caractérisé en ce que**, un revêtement en matériau dur est appliqué par une technique de traitement superficiel au jet de plasma ou par pulsation du laser au moins à une zone de contact (10, 11, 12 ; 30, 31, 32) exposée au risque d'usure et / ou à une surface de roulement (15, 22) de la butée de débrayage (1, 21).
